# EUROPEAN PATENT APPLICATION

(11) **EP 2 442 262 A1**
(43) Date of publication of application: **18.04.2012**
(21) Application number: 10187847.8
(22) Date of filing: 18.10.2010
(51) Int. Cl.: G06Q 10/00

(54) **Monitoring tool for transfer processess**

(71) Applicant: Deutsche Post AG, 53113 Bonn (DE)
(72) Inventor: Ghosh, Somok, 53177 Bonn (DE)
(74) Representative: Dieckhoff, Beate

(57) **Abstract**

The invention provides a monitoring tool for monitoring and supporting a transfer processes from a first vendor to a second vendor having at least one responsible person assigned to each vendor comprising at least one computer system with at least one computer screen providing multiple process related windows (1, 2, 3) comprising
- a tracking window (1) comprising at least a process window (11) to display project information, preferably comprising a contact window (12) displaying contact data, more preferably additionally comprising a statistic window (13) displaying statistic data related to the process, where the tracking window (1) is linked to at least a dashboard window (2), preferably via a tracking button (14);
- the dashboard window (2) displaying at least multiple performance items (21, 22) to be executed within the transfer process, where the performance items (21, 22) are individually linked to a performance details window (3) for each performance item (21, 22);
- the performance details window (3) comprising an overview window (31) to display general performance data and a data window (32) suitable to insert and/or attach process and/or performance data via editable data fields (321) into the monitoring tool, where the monitoring tool is adapted to automatically create a document file (D) from the data inserted into the data window (32) also indicating the particular performance details window (3);

an information unit (4) adapted to automatically send a process notification (N), preferably an e-mail, comprising the document file (D) to at least one of the responsible persons after the document file (D) have been created.

## Description

### Field of the invention

The invention relates to the field of monitoring tools for transfer processes.

### Background of the invention

Project planning is part of project management, which relates to the use of schedules such as Gantt charts to plan and subsequently report progress within the project environment.

Initially, the project scope is defined and the appropriate methods for completing the project are determined. Following this step, the durations for the various tasks necessary to complete the work are listed and grouped into a work breakdown structure. The logical dependencies between tasks are defined using an activity network diagram that enables identification of the critical path. Float or slack time in the schedule can be calculated using project management software. Then the necessary resources can be estimated and costs for each activity can be allocated to each resource, giving the total project cost. At this stage, the project plan may be optimized to achieve the appropriate balance between resource usage and project duration to comply with the project objectives. Once established and agreed, the plan becomes what is known as the baseline. Progress will be measured against the baseline throughout the life of the project. Analyzing progress compared to the baseline is known as earned value management.

The inputs of the project planning phase include Project Charter and the Concept Proposal. The outputs of the Project Planning phase include the Project Requirements, the Project Schedule, and the Project Management Plan.

There are several paper and software tools available supporting the project management, e.g. for knowledge transfer processes, in certain aspects. However, the available tools do not provide a sufficient support to the project members and project owners to execute such project reliable.

For example, displaying the Gantt chart view by default encourages users to focus on timed task scheduling too early, rather than identifying objectives, deliverables and the imposed logical progress of events (dig the trench first to put in the drain pipe).

Some solutions focus primarily on the planning phase and do not offer enough functionality for project tracking, control and in particular plan-adjustment. There may be excessive dependency on the first draft of a project plan, which is simply a snapshot at one moment in time. The plan is dynamic; as the project progresses the plan must change to accommodate tasks that are completed early, late, resequenced, etc. Good management software should not only facilitate this, but assist with impact assessment and communication of plan changes.

Some solutions do not make a clear distinction between the planning phase and post planning phase, leading to user confusion and frustration when the software does not behave as expected.

Some solutions offer complicated features to meet the needs of project management or project scheduling professionals, which must be understood in order to effectively use the product. Additional features may be so complicated as to be of no use to anyone. Complex task prioritization and resource leveling algorithms for example can produce results that make no intuitive sense. Some people may achieve better results using simpler technique, (e.g. pen and paper), yet feel pressured into using project management software by company policy (discussion).

Furthermore some management software might shield the manager from important interpersonal contact.

New types of software are challenging the traditional definition of Project Management. Frequently, users of project management software are not actually managing a discrete project. For instance, managing the ongoing marketing for an already-released product is not a "project" in the traditional sense of the term; it does not involve management of discrete resources working on something with a discrete beginning/end.

It is desirable to use a monitoring tool for reliable executing a certain project helping the involved people not to miss important issues, especially when managing multiple larger projects.

### Summary of the invention

It is an object of the invention to provide a monitoring tool providing sufficient support to the project members and project owners to execute such project reliable and helping the involved people not to miss important issues.

This object is achieved by a monitoring tool for monitoring and supporting transfer processes from a first vendor to a second vendor having at least one responsible person assigned to each vendor comprising at least one computer system with at least one computer screen providing multiple process related windows comprising
- a tracking window comprising at least a process window to display project information, preferably comprising a contact window displaying contact data, more preferably additionally comprising a statistic window displaying statistic data related to the process, where the tracking window is linked to at least a dashboard window, preferably via a tracking button;
- the dashboard window displaying at least multiple performance items to be executed within the transfer process, where the performance items are individually linked to a performance details window for each performance item;
- the performance details window comprising an overview window to display general performance data and a data window suitable to insert and/or attach process and/or performance data via editable data fields into the monitoring tool, where the monitoring tool is adapted to automatically create a document file from the data inserted into the data window also indicating the particular performance details window;
- an information unit adapted to automatically send a process notification, preferably an e-mail, comprising the document file to at least one of the responsible persons after the document file have been created.

Transfer processes may denote any kind of processes, which should be monitored and supported by a computer based monitoring tool. Project members are people involved in the execution of the transfer process. Responsible people are part of the project members. An example of such a transfer process is a knowledge transfer process or a device transfer process. Vendors (first and second) denote parties involved in the transfer process, where the transfer typically happens from a first vendor (giving party) to a second vendor (receiving party). The first vendor may by the former vendor transferring the process to the second vendor as the subsequent vendor. In other transfer processes the first vendor might be the customer of a service provider (also denotes as former vendor or former service provider). By changing the service provider the second vendor is the new service provider and the first vendor was the customer of the former vendor and will be the customer of the second vendor. The monitoring tool may be installed on common computer systems, e.g. to be run on a server based platform in a XML or HTML format. The term "window" denotes a window as a visual area containing some kind of graphical user interface (GUI). It usually has a rectangular shape. It displays the output of and may allow input to one or more processes. Windows are primarily associated with graphical displays, where they can be manipulated with a mouse cursor, e.g. by clicking on links and/or on editable data fields. Windows are two dimensional objects arranged on a plane called the desktop or computer screen, which can be resized, moved, hidden, restored or closed. Windows usually include other graphical objects, possibly including a menu-bar, toolbars, controls, icons and often a working area, e.g. editable data fields. In the working area, the document, image, folder contents or other main object is displayed. Around the working area within the bounding window, there may be other smaller window areas, sometimes called panes or panels, showing relevant information or options. The working area may be capable of holding only one (single document interface) or more than one main object in a multiple document interface. Also, some windows in Mac OS X have a feature called a drawer, which is a pane that slides out the side of the window which contains extra options without cluttering the main window space. A program may create more than one window on the desktop. Sometimes child windows or'dialogs' appear in front of the main one such as when saving or opening a file. Some programs create separate windows for each open document or image, or when specific options are available. When two windows overlap the front one is usually opaque, but some modern windowing systems can make all or part of their windows semi-transparent.

The performance items correspond to certain milestones to be passed during the transfer process. To complete the transfer process, it is not mandatory to execute each of the performance items. However it is strongly recommended to execute the performance items (also denotes as key performance indicator or KPI) listed in the dashboard window. The performance items listed in the dashboard window might be default items always displayed in the dashboard window. In an embodiment the performance items listed in the dashboard window might be provided by a database of the computer system in dependence on the particular transfer process. The database might store different types of performance items for different types of processes. In another embodiment, the content of performance items might be adapted during the transfer process on demand by manually uploading additional performance item from the database or by defining additional performance items. These new defined performance items might be added to the listed performance items via a suitable process to adapt the list of performance items or might be added to the stored performance items in the database and subsequently uploaded. Also the list performance items assigned to a certain process type might be adapted in order to modify the list of performance items displayed in the dashboard window. In case of performance items uploaded into the dashboard window in dependence on the particular process to be monitored, the tracking window might further comprise an editable data filed to insert the process type, for which the monitoring tool shall be used. Alternatively, the process type might be selected from a scroll-down menu or may be selected from a displayed table, where the table content is linked to a certain process type triggering the upload of the corresponding performance items. The dashboard window might also support the deletion of performance items from the dashboard window on demand. Preferably the displayed content of the dashboard, in particular the displayed performance items is frozen by starting the transfer process. The term "frozen" denotes for example, that performance items cannot be removed from the dashboard window by the people involved in this process. This prevents mistakes or manipulation of the monitoring of the currently executed transfer process.

Each performance item represents one or more tasks to be executed, for which the performance details window may comprises control points to indicate the execution of tasks related to these control points in case of filled control points or to indicate tasks which still have to be done in case of non-filled control points. The control point might be presented as editable data fields or scroll-down menus to set an indicator to a certain value specifying a certain status. The indicators or the filled data fields might also indicate a certain degree of completion of a certain task or certain tasks in average.

The process notification may denote any kind of computer based notifications to people, which are involved in the transfer process. The information unit is the corresponding unit within the computer system able to send-out the notification. The notification is sent to a data interface accessible for responsible person. As an example, the data interface might be the computer of a responsible person or an e-mail account accessible for the responsible person within a computer system. As an example, such notification might be sent as an e-mail, since people generally have a worldwide access to e-mails and the information unit might be an e-mail system such as Microsoft Outlook. The point in time, when the notification will be automatically send-out might be triggered by the creation of the document file, which is also automatically executed, or by the upload of the document file in the database storing data related to the transfer process. During an upload process, the use of the upload button might trigger the information unit to send-out the notification. Here the document file might be uploaded to a document share point, which is accessible for the different parts of the computer system and/or for the people involved in the transfer process. In another embodiment the monitoring tool may provide a second document file comprising an overview of the status of each performance item regularly, e.g. monthly, weekly or daily. The information unit may notify the persons involved in the transfer process about the overview by regularly sending out a second notification comprising the second document file. The second document file may by establish in an excel format. Alternatively the second document files may be established for each process phase.

Statistic data related to the process might be data about required / available manpower, required / available time, required / available money etc. People skilled in the art may choose other or additional statistic data related to the process within the scope of the present invention.

In an embodiment the document file comprises at least general performance data, the inserted process and/or performance data and an indication of still empty data fields of the data window. With this information, the receiving people can assign the document file to a particular performance item and the made progress is visible at first glance.

In another embodiment the process notification is an e-mail comprising a link to the performance details window, which is indicated in the document file. The link helps people to access the window of importance in an easy way and acts as a reference to what have been done so far.

In another embodiment the performance items have assigned responsible persons and each of the performance items indicate the subsequent performance item to be executed. The assigned responsible persons might be displayed together with the performance items in a table format within the dashboard window to provide an easy overview of each item is addressed to a person and who is the person or might be linked to the performance items in the background for addressing notifications. In a preferred embodiment the information unit is adapted to send the process notification also to the responsible person of the subsequent performance items to be executed after filling the data window of the performance details window of the initial performance item, which led to the creation of the document file sent by the process notification. In case of e-mail as process notifications the responsible persons might be assigned to the performance items via a link generated by the e-mail address of the responsible person to enable the information unit to address the e-mail to the right persons.

In another embodiment the editable data fields, e.g. present in the performance details screen, are fields adapted to insert and/or attach data about one or more elements of the group of status data, assigned persons, required persons, performance item identification number, remarks, evaluation data of the first and/or second vendor, data confirming the degree of the completion of the performance item, required actions, planning data such as time schedules (as planned and/or current situation), list of attached documents, means for attaching documents, and/or a priority indicator. People skilled in the art may choose other or additional data fields within the scope of this invention.

In another embodiment the dashboard window displays additional information to each performance item, which might be at least the responsible person for the performance item and the status of the performance item, or additionally the creator of the performance item and/or the category of the performance item. This additional information enables the user of the monitoring tool to contact the required people to answer questions, to provide other kind of input, or to execute tasks easily and fast. The contact might be established via the responsible person, for example via a list of further people and/or addresses displayed by the computer system when contacting the listed responsible person. Therefore at least one of the additional information is displayed as link suitable to contact a responsible person by e-mail and/or to access the related performance details window in a preferred embodiment.

In another embodiment the dashboard window is adapted to display the performance items and the additional information as a table with the performance items present in a first column and the additional information in corresponding columns providing a good overview at first glance.

In another embodiment the dashboard window is adapted to display a priority indicator for each of the performance items indicating the sequence and/or importance of the performance items to be executed. The priority indicator might be displayed colored or with a colored background in order to emphasize the indication. The indicator is useful to prioritize the sequence of tasks to be executed. The indicator might be set automatically by inserting / uploading data to certain data fields, e.g. when after having executed (completed) a certain performance item, the priority indicator of the subsequent performance items might be changed to a status having a higher priority. Alternatively after inserting / uploading essential data fields in a certain performance details window, the priority indicator of the corresponding performance item might be lowered, because only a minor number of tasks or tasks with a lower priority have to be executed. In another embodiment the monitoring tool (the dashboard window) might be adapted to display the performance items sorted according to the priority to execute the performance items indicated by the priority indicators.

In another embodiment the dashboard window comprises a progress window indicating at least the number of executed performance items automatically received from status data from the data fields of the performance details windows. The progress window helps to estimate the still required time to complete the full transfer process and helps to analyze the current status with respect to the original planning.

In another embodiment the performance details window is accessible by clicking on a particular performance item within the dashboard window providing an easy access to the performance details window allowing a fast data insert / upload.

In another embodiment the performance items are related to different phases of the transfer process, where the different phases comprise one or more elements, preferably all elements, of the group of initializing phase, due diligence phase, knowledge acquisition phase, transfer phase (passive and/or active), or calibration phase. The above listed phases might comprise sub-items related to the particular phase, which might also be displayed as performance items in the dashboard window.

The invention further relates to a method to operate the monitoring tool as claimed in the present invention for monitoring and supporting a transfer processes from a first vendor to a second vendor having at least one responsible person assigned to each vendor comprising at least one computer system with at least one computer screen providing multiple process related windows comprising the steps of
- accessing a tracking window comprising at least a process window to display project information, preferably comprising a contact window displaying contact data, more preferably additionally comprising a statistic window displaying statistic data related to the process,
- Accessing a dashboard window, preferably via a tracking button, where the tracking window is at least linked to;
- displaying at least multiple performance items to be executed within the transfer process on a the dashboard window,
- accessing a performance details window individually linked to each of the performance items, preferably by clicking on a particular performance item within the dashboard window;
- inserting and/or attaching process and/or performance data into the monitoring tool via editable data fields in a data window of the performance details window further comprising an overview window to display general performance data
- creating a document file from the data inserted into the data window by the monitoring tools also indicating the particular performance details window; and
- sending a process notification, preferably an e-mail, comprising the document file to at least one of the responsible persons after the document file have been created by an information unit, preferably sending the process e-mail also to the responsible person of the subsequent performance items to be executed after filling the data window of the performance details window of the initial performance item, which lead to the creation of the document file sent by the process notification.

In an embodiment the method further comprises the steps of displaying additional information to each performance item in the dashboard window, preferably in a table format comprising multiple columns, more preferably also displaying a priority indicator for each of the performance items indicating the sequence and/or importance of the performance items to be executed in the dashboard window, even more preferably indicating at least the number of executed performance items automatically received from status data from the data fields of the performance details windows.

### Brief description of the drawings

These and other aspects of the invention will be apparent from and elucidated with reference to the embodiments described hereinafter.

In the drawings:

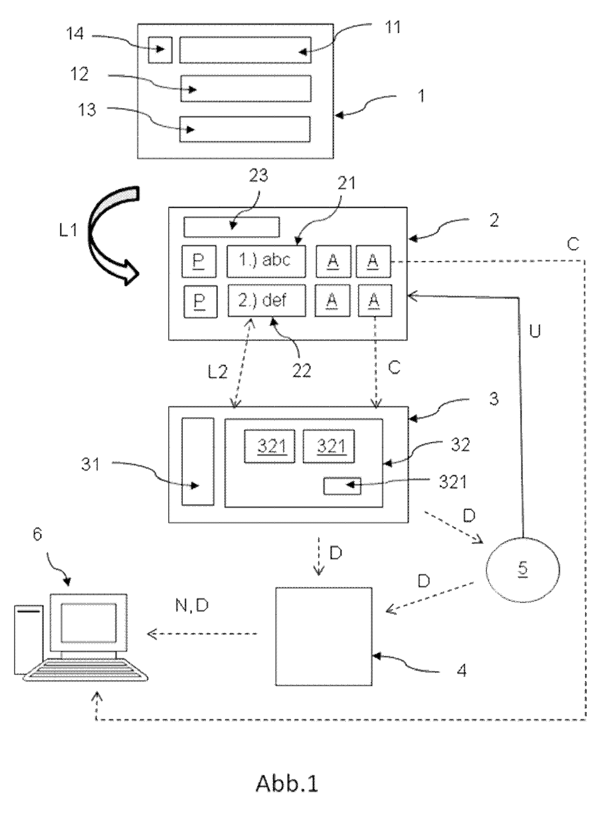

- Fig. 1:: an embodiment of the monitoring tool according to the present invention.

### Detailed description of embodiments

Fig. 1 shows an embodiment of the monitoring tool according to the present invention for monitoring and supporting a transfer processes from a first vendor to a second vendor having to at least one responsible person assigned to each vendor comprising at least one computer system with at least one computer screen providing multiple process related windows 1, 2, 3 comprising a tracking window 1 comprising a process window 11 to display project information, a contact window 12 to display contact data, and a statistic window 13 to display statistic data related to the process, where the tracking window 1 is linked to at least a dashboard window 2, preferably via a tracking button 14. Statistic data related to the process might be data about required / available manpower, required / available time, required / available money etc. People skilled in the art may choose other or additional statistic data related to the process within the scope of the present invention.

Furthermore the monitoring tool comprises the dashboard window 2 displaying at least multiple performance items 21, 22 to be executed within the transfer process, where the performance items 21, 22 are individually linked to a performance details window 3 for each performance item 21, 22. Here the dashboard window 2 displays additional information A to each performance item 21, 22, where the additional information A could be the responsible person for the performance item 21, 22, the status of the performance item 21, 22, the creator of the performance item 21, 22 and/or the category of the performance item 21, 22. The additional information A establishes a link C suitable to contact a responsible person by e-mail and/or to access the related performance details window 3 by clicking on the additional information A. The dashboard window 2 is adapted to display the performance items 21, 22 and the additional information A in a table format with the performance items 21, 22 arranged in a first column and the additional information A in corresponding columns. In front (left side) of the performance items 21, 22, there is a priority indicator P arranged for each of the performance items 21, 22 indicating the sequence and/or importance of the performance items 21, 22 to be executed. The priority indicator may be highlighted by a red, yellow, green color to visually emphasize its status. Additionally the dashboard window 2 comprises a progress window 23 indicating at least the number of executed performance items 21, 22 automatically received from status data from the data fields 321 of the performance details windows 3. The performance items 21, 22 listed in the dashboard window are uploaded U from a database 5 of the computer system in dependence on the particular transfer process.

The monitoring tool further comprises a performance details window 3, which is accessible by clicking on a particular performance item 21, 22 within the dashboard window 2. The performance details window 3 comprises an overview window 31 to display general performance data and a data window 32 suitable to insert and/or attach process and/or performance data via editable data fields 321 into the monitoring tool, where the monitoring tool is adapted to automatically create a document file D from the data inserted into the data window 32 also indicating the particular performance details window 3. The document file D comprises at least the general performance data, the inserted process and/or performance data and an indication of still empty data fields 321 of the data window 32.

The monitoring tool further comprises an information unit 4 adapted to automatically send a process notification e-mail N comprising the document file D to the computer 6 of at least one of the responsible persons after the document file D have been created. The point in time, when the notification N will be automatically send-out might be triggered by the creation of the document file D, which is also automatically executed, or by the upload of the document file D in the database 5 storing data related to the transfer process. During an upload process, the use of the upload button as part of an editable data field 321 might trigger the information unit 4 to send-out the notification N. Here the document file D might be uploaded to a document share point, which is accessible for the different parts of the computer system and/or for the people involved in the transfer process. The e-mail N or the document file D sent by the e-mail N comprises a link to the performance details window 3, which is indicated in the document file D. Here the information unit 4 is adapted to send the process notification N also to the responsible person of the subsequent performance items 21, 22 to be executed after filling the data window 32 of the performance details window 3 of the initial performance item 21, 22, which lead to the creation of the document file D sent by the process notification N.

The performance items 21, 22 displayed in the dashboard window are related to different phases of the transfer process, where the different phases comprise one or more elements, preferably all elements, of the group of initializing phase, planning phase, due diligence phase, knowledge acquisition phase, a passive transfer phase, an active transfer phase, and a calibration phase.

The following performance items may occur in the initialization phase of the transfer process. At the beginning of the transfer process, the monitoting tool should make sure that following performance items has been executed, preferably by inserting data in the editable data fields and/or loading-up documents by help of the editable data fields (e.g. comprising an upload button).
- Insert and store defoned best practices in mind for the transfer process to be monitored and supported by the monitoring tool.
- collect all the current documentation and stored it in the monitoring tool.
- Insert all defined hardware, software, maintenance, security requirements.
- Insert all the stakeholders.
- Upload contractual agreement with the former vendor to be able to handover all the tacit and implicit knowledge about the application.
- Establish and upload resource availability matrix for the transition process.
- Insert planning for the due diligence and rough transition planning. Proof the existance of risk management planning and mitigation plan (e.g. with checking a checker box in the performace details window)

The following performance items may occur in the planning phase, the due diligence phase and/or the knowledge acquisition phase of the transfer process. The first vendor will now execute a due diligence to start the transfer process with the second vendor. The monitoring tool should make sure that following performance items has been executed, preferably by inserting data in the editable data fields and/or loading-up documents by help of the editable data fields (e.g. comprising an upload button).
- Establish and store/upload findings of the due diligence
- Establish and store/upload documentation of each session of the due diligence activity
- Establish and store/upload communication plan with the demand management
- Establish and store/upload communication plan with the service management
- Establish and store/upload communication plan with the service provider
- Establish and store/upload communication plan with the former vendor
- Establish and store/upload understanding of the security requirements
- Establish and store/upload understanding of the business requirements
- Establish and store/upload understanding of the technology behind the application
- Establish and store/upload gap analysis of the current team's skill level
- Establish and store/upload revised risk register
- Establish and store/upload concrete transition plan
- Establish and store/upload concrete hardware requirement
- Establish and store/upload resource plan for the transition
- Establish and store/upload incident process management documentation
- Establish and store/upload service request/problem/change management documentation
- Establish and store/upload security measure implementation planning documentation
- Establish and store/upload security audit report
- Establish and store/upload infrastructure setup planning documentation
- Establish and store/upload proof of start of translation activity
- Provide access control for Project Life Cycle Management for the identified team members (e.g. by uploading a list of authorized persons to have access to the monitoring tool, which have to identify themselves before starting the monitoring toll and/or inserting/uploading data into the editable data fields).

The following performance items may occur in the knwoledge transfer phase of the transfer process. The first vendor will now execute a due diligence of the application and the system to start the transfer process with the second vendor. The monitoring tool should make sure that following performance items has been executed, preferably by inserting data in the editable data fields and/or loading-up documents by help of the editable data fields (e.g. comprising an upload button). The monitoring tool support execution and set-up of classroom sessions with the former service provider. In classroom sessions the second vendor will start looking, how the former service provider executs steps of the process to be transferred to the second vendor, e.g. a ticket solving procedure in case of IT processes. The monitoring tool proof whether the second vendor has documented all the sessions with the former provider (e.g. whether recognizing the upload of the corresponding document or via checked checker boxes). To improve the learning process the monitoring tool may provide a second performance item asking the second vendor e.g. to watch again how the former service provider is solving the tickets with the knowledge that the second vendor has acquired during the first classroom sessions. Once the Knowledge transfer (classroom sessions) are executed, in order to make sure that all the knowledge gaps are either closed or identified, the following performance items may be executed:
- Proof that knowledge transfer documentation is in place
- Establish and store/upload documentation of each session of the transition activity by second vendor
- Execute sign off procedure for each session of the transition activity by the former vendor
- Execute sign off of the knowledge gap analysis by the both vendors
- Execute sign off of the documentation gap analysis by the both vendors
- Establish and store/upload documentation of the classroom session activities
- Establish and store/upload resumes of the resources of the second vendor has been delivered to the first vendor
- Proof, wether 30% of the total documentation is translated into English
- Proof that intercultural training has been executed by the second vendor
- Update gap analysis of the current team's skill level (Should be improved since last time)
- update revised risk register
- proof that transition plan has been executed without any gap
- proof that hardware requirement implemented
- proof that all service level agreements are met completely during the complete phase
- proof that former vendor confirms that second vendor has obtained all the documentation and performed all signs offs

Proof for inserted/uploaded document or executed actions might be performed via searching for the corresponding document in the data base and in case of finding the docuzments automatically indicating the completeness or via checking of checker boxes within the performance detaisl window (applicable for all phases). A sign off procedure might by performed by sending confirmation requests as part of the notification send out by the information unit. When the information unit receives of the confirming response to the notification, the receive may trigger to close the sign off procedure by indicating the successful sign off, e.g. by checking a checker box, changing the color of the corresponding performance item or other visual signs (applicable for all phases). Also priority indicators of corresponding performance items might be changed as result of the competed sign- off procedure (applicable for all phases)

Classroom session are considered as a passive knwoledge transfer (also denotes as passive shadowing), where the former service provider is solving the tickets, and second vendor is sitting behind and watching the executed process, documenting the use case and reason for the executed activities. Also the second vendor is documenting the process behind solving the incidents, change requests, and service requests. After finishing the passive shadowing, the second vendor will now take over the actions formerly performed by the former service provider and solve the tickets. The former service provider will sit behind and simply help the second vendor to correctly execute the rewqquired actions. This part is also denoted as the active transfer phase (or active shadowing). The monitoring tool monitors and supports this phase by providing the following performance items to be executed, preferably by inserting data in the editable data fields and/or loading-up documents by help of the editable data fields (e.g. comprising an upload button).
- Proof that knowledge transfer documentation is in place (improvement from previous Phase)
- Establish and store/upload documentation of each session of the transition activity by the second vendor
- Execute sign off of each session of the transition activity by the former vendor
- Execute sign off of the Knowledge gap analysis by the both vendors (improvement to last time)
- Execute sign off of the documentation gap analysis by the both vendors (improvement to last time)
- Establish and store/upload documentation of the ticket level working by both vendors
- Proof the use of case based knowledge transfer documentation
- Proof that 50% of the total documentation is translated into English
- Proff that second vendor demonstrates first model of offshore/onsite work of ticket resolution
- Update gap analysis of the current team's skill level (should be improved since last time)
- Update revised risk register (mitigation steps are visible in the plan)
- Proff that second vendor is ready to sit on the hot seat to solve the tickets
- Proof that all the stakeholder has received the new contacts of the second vendor
- Proof that all service level agreements are met completely during the complete phase
- Proof that incident management process has been established with the second vendor
- Proof that change management process has been established with the second vendor
- Establish and store/upload service request resolution process with the second vendor
- Proof that off shore location setup is complete and ready to work
- Proof that security requirements are implemented in the offshore location
- Proof that first quality audit for the transition process has been executed and made available

The second vendor is sitting at the hot seat solving the tickets and documenting the use case and reason for these activities. Also the former service provider is helping the second vendor to resolve the issues. At end of this phase, the second vendor will now be able to solve the problems without any help of the former service provider.

The monitoring tool monitores and support the following calibration phase by providing the following performance items
- Proof that knowledge transfer documentation is in place (Improvement to previous phase)
- Proof that documentation of each session of the Transition activity is available for the second vendor
- Execute sign off of each session of the transition activity by the former vendor
- Execute sign off of the Knowledge gap analysis by the both vendors (should not be any gaps present)
- Execute sign off of the documentation gap analysis by the both vendors (improvement than last time)
- Establish and store/upload documentation of the ticket level working by both vendors
- Proof use of case based knowledge transfer documentation
- Prrof that 70% of the total documentation is translated into English
- Prrof that second vendor demonstrates complete model of offshore/onsite work of ticket resolution
- Update revised risk register (mitigation steps are visible in the plan, improvement from the last time)
- Proof that second vendor is ready to sit on the hot seat to solve the tickets
- Proof that all service level agreements are met completely during the complete phase
- Establish and store/upload governance model
- Proof that quarterly relationship management meeting has been scheduled
- Proof that regular meeting schedule has been organized between BL,SM and second vendor
- Proof that second vendor understands and follows the reporting standard of DP
- Proof that offshore/onsite team has been finalised, non disclosure agreements (NDA) signed with all parties involved
- Check whether second provider suggests some off shoring best practices that they want to implement

After finishing the calibration phase the second vendor has been solving tickets since almost the complete calibration period without any further help. To finish the transfer process the following performance items are provided:
- Proof that knowledge transfer documentation is in place (improvement from previous phase)
- Establish and store/upload documentation of each ticket solving activity by the second vendor
- Proof that 90% of the total documentation is translated into English
- Proff that all the use cases has been documented, verified by the BL and the FS
- Proof that risk register is empty
- Proof that attrition risk has been mitigated by the off shore vendor
- Proof that all service level agreements (SLAs) are met completely during the complete phase, same SLAs as before
- Proof that no variance is the reporting to the SM(1 H2)
- Proof that first example of outsourcing/Off shoring best practices has been demonstrated
- Proof that 100% security gaps has been closed, 1 G5 has audited and confirmed
- Proof that second vendor has the complete code tree to maintain
- Proof that in case there is a development partner, configuration management is in place
- Proof tha collaboration process with the development partner is in place
- Proof that regular communication with the development partner is in place
- Proof that business people or IT has confirmed that all future architecture change/releases will be communicated
- Proof that daily communication channel between onsite and offshore setup
- Proof that a customer satisfaction survey cycle has been setup

The above listed performance items are only one example of performance items related to a transfer process. Other transfer process may require a different list of performance items. People skilled in the art are able to adapt the required performance items to the involved transfer process. However the monitoring tool is able to execute any list of performance items, which might be provided by the database 5, preferably as a function of the transfer process to be monitored. Here the type of the transfer process might be indicated by a type indicator (e.g. an ID-number) and the database provide the performance items corresponding to the type indicator.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### List of reference signs

- 1: tracking window
- 11: process window
- 12: contract window
- 13: statistic window
- 14: tracking button
- 2: dashboard window
- 21, 22: performance items
- 23: progress window
- 3: performance details window
- 31: overview window
- 32: data window
- 321: editable data fields
- 4: information unit
- 5: database
- 6: computer or accessible account of responsible person
- A: additional information (eventually in a separate window)
- C: link to contact responsible person or performance details screen
- D: document file
- L1: link from tracking window to dashboard window
- L2: link from dashboard window to performance details window
- N: notification
- P: priority indicator
- U: uploading performance items from the database to the dashboard window

## Claims

1. A monitoring tool for monitoring and supporting a transfer processes from a first vendor to a second vendor having at least one responsible person assigned to each vendor comprising at least one computer system with at least one computer screen providing multiple process related windows (1, 2, 3) comprising
- a tracking window (1) comprising at least a process window (11) to display project information, preferably comprising a contact window (12) displaying contact data, more preferably additionally comprising a statistic window (13) displaying statistic data related to the process, where the tracking window (1) is linked to at least a dashboard window (2), preferably via a tracking button (14);
- the dashboard window (2) displaying at least multiple performance items (21, 22) to be executed within the transfer process, where the performance items (21, 22) are individually linked to a performance details window (3) for each performance item (21, 22);
- the performance details window (3) comprising an overview window (31) to display general performance data and a data window (32) suitable to insert and/or attach process and/or performance data via editable data fields (321) into the monitoring tool, where the monitoring tool is adapted to automatically create a document file (D) from the data inserted into the data window (32) also indicating the particular performance details window (3);
- an information unit (4) adapted to automatically send a process notification (N), preferably an e-mail, comprising the document file (D) to at least one of the responsible persons after the document file (D) have been created.

2. The monitoring tool as claimed in claim 1, **characterized in that** the document file (D) comprises at least general performance data, the inserted process and/or performance data and an indication of still empty data fields (321) of the data window (32).

3. The monitoring tool as claimed in claim 1 or 2, **characterized in that** the process notification (N) is an e-mail comprising a link to the performance details window (3), which is indicated in the document file (D).

4. The monitoring tool as claimed in any of the preceding claims, **characterized in that** each of the performance items (21, 22) have assigned responsible persons and each of the performance items (21, 22) indicate the subsequent performance item (21, 22) to be executed.

5. The monitoring tool as claimed in claim 4, **characterized in that** the information unit (4) is adapted to send the process notification (N) also to the responsible person of the subsequent performance items (21, 22) to be executed after filling the data window (32) of the performance details window (3) of the initial performance item (21, 22), which lead to the creation of the document file (D) sent by the process notification (N).

6. The monitoring tool as claimed in any of the preceding claims, **characterized in that** the editable data fields (321) are fields adapted to insert and/or attach data about one or more elements of the group of status data, assigned persons, required persons, performance item identification number, remarks, evaluation data of the first and/or second vendor, data confirming the degree of the completion of the performance item, required actions, planning data such as time schedules (as planned and/or current situation), list of attached documents, means for attaching documents, and/or a priority indicator.

7. The monitoring tool as claimed in any of the preceding claims, **characterized in that** the dashboard window (2) displays additional information (A) to each performance item (21, 22), preferably the additional information (A) are at least the responsible person for the performance item (21, 22) and the status of the performance item (21, 22), more preferably additionally the creator of the performance item (21, 22) and/or the category of the performance item (21, 22).

8. The monitoring tool as claimed in claim 8, **characterized in that** at least one of the additional information (A) is displayed as link (C) suitable to contact a responsible person by e-mail and/or to access the related performance details window (3).

9. The monitoring tool as claimed in claim 7 or 8, **characterized in that** the dashboard window (2) is adapted to display the performance items (21, 22) and the additional information (A) as a table with the performance items (21, 22) present in a first column and the additional information (A) in corresponding columns.

10. The monitoring tool as claimed in any of the preceding claims, **characterized in that** the dashboard window (2) is adapted to display a priority indicator (P) for each of the performance items (21, 22) indicating the sequence and/or importance of the performance items (21, 22) to be executed.

11. The monitoring tool as claimed in any of the preceding claims, **characterized in that** the dashboard window (2) comprises a progress window (23) indicating at least the number of executed performance items (21, 22) automatically received from status data from the data fields (321) of the performance details windows (3).

12. The monitoring tool as claimed in any of the preceding claims, **characterized in that** the performance details window (3) is accessible by clicking on a particular performance item (21, 22) within the dashboard window (2).

13. The monitoring tool as claimed in any of the preceding claims, **characterized in that** the performance items (21, 22) are related to different phases of the transfer process, where the different phases comprise one or more elements, preferably all elements, of the group of initializing phase, due diligence phase, knowledge acquisition phase, transfer phase, which might be passive and/or active, or calibration phase.

14. Method to operate the monitoring tool as claimed in claim 1 for monitoring and supporting a transfer processes from a first vendor to a second vendor having at least one responsible person assigned to each vendor comprising at least one computer system with at least one computer screen providing multiple process related windows comprising the steps of
- accessing a tracking window (1) comprising at least a process window (11) to display project information, preferably comprising a contact window (12) displaying contact data, more preferably additionally comprising a statistic window (13) displaying statistic data related to the process,
- accessing a dashboard window (2), preferably via a tracking button (14), where the tracking window (1) is at least linked to;
- displaying at least multiple performance items (21, 22) to be executed within the transfer process on a the dashboard window (2),
- accessing a performance details window (3) individually linked to each of the performance items (21, 22), preferably by clicking on a particular performance item (21, 22) within the dashboard window (2);
- inserting and/or attaching process and/or performance data into the monitoring tool via editable data fields (321) in a data window (32) of the performance details window (3) further comprising an overview window (31) to display general performance data;
- creating a document file (D) automatically from the data inserted into the data window (32) by the monitoring tools also indicating the particular performance details window (3); and
- sending a process notification (N) automatically, preferably an e-mail, comprising the document file (D) to at least one of the responsible persons after the document file (D) have been created by an information unit (4), preferably sending the process e-mail (N) also to the responsible person of the subsequent performance items (21, 22) to be executed after filling the data window (32) of the performance details window (3) of the initial performance item (21, 22), which lead to the creation of the document file (D) sent by the process notification (N).

15. Method as claimed in claim 14, **characterized in that** the method further comprises the steps of displaying additional information (A) to each performance item (21, 22) in the dashboard window (2), preferably in a table format comprising multiple columns, more preferably also displaying a priority indicator (P) for each of the performance items (21, 22) indicating the sequence and/or importance of the performance items (21, 22) to be executed in the dashboard window (2), even more preferably indicating at least the number of executed performance items (21, 22) automatically received from status data from the data fields (321) of the performance details windows (3).

## Amended claims

### Amended claims in accordance with Rule 137(2) EPC.

**1.** A monitoring tool for monitoring and supporting a transfer process from a giving party involved in the transfer process to a receiving party involved in the transfer process having to at least one responsible person assigned to each party installed on a computer system with at least one computer screen providing multiple process related windows (1, 2, 3) comprising
- a tracking window (1) comprising at least a process window (11) to display project information, preferably comprising a contact window (12) displaying contact data, more preferably additionally comprising a statistic window (13) displaying statistic data related to the process, where the tracking window (1) is linked to at least a dashboard window (2), preferably via a tracking button (14);
- the dashboard window (2) displaying at least multiple performance items (21, 22) to be executed within the transfer process, where the performance items (21, 22) are individually linked to a performance details window (3) for each performance item (21, 22);
- the performance details window (3) comprising an overview window (31) to display general performance data and a data window (32) suitable to insert and/or attach process and/or performance data via editable data fields (321) into the monitoring tool, where the monitoring tool is adapted to automatically create a document file (D) from the data inserted into the data window (32) also indicating the particular performance details window (3);
- an information unit (4) adapted to automatically send a process notification (N) by e-mail comprising the document file (D) to at least one of the responsible persons, wherein the automatic send-out of the notification is triggered by the upload of the document file (D) to a document share-point.

**2.** The monitoring tool as claimed in claim 1, **characterized in that** the document file (D) comprises at least general performance data, the inserted process and/or performance data and an indication of still empty data fields (321) of the data window (32).

**3.** The monitoring tool as claimed in claim 1 or 2, **characterized in that** the process notification (N) is an e-mail comprising a link to the performance details window (3), which is indicated in the document file (D).

**4.** The monitoring tool as claimed in any of the preceding claims, **characterized in that** each of the performance items (21, 22) have assigned responsible persons and each of the performance items (21, 22) indicate the subsequent performance item (21, 22) to be executed.

**5.** The monitoring tool as claimed in claim 4, **characterized in that** the information unit (4) is adapted to send the process notification (N) also to the responsible person of the subsequent performance items (21, 22) to be executed after filling the data window (32) of the performance details window (3) of the initial performance item (21, 22), which lead to the creation of the document file (D) sent by the process notification (N).

**6.** The monitoring tool as claimed in any of the preceding claims, **characterized in that** the editable data fields (321) are fields adapted to insert and/or attach data about one or more elements of the group of status data, assigned persons, required persons, performance item identification number, remarks, evaluation data of the first and/or second party, data confirming the degree of the completion of the performance item, required actions, planning data such as time schedules (as planned and/or current situation), list of attached documents, means for attaching documents, and/or a priority indicator.

**7.** The monitoring tool as claimed in any of the preceding claims, **characterized in that** the dashboard window (2) displays additional information (A) to each performance item (21, 22) where the additional information (A) are at least the responsible person for the performance item (21, 22) and the status of the performance item (21, 22), and additionally the creator of the performance item (21, 22) and/or the category of the performance item (21, 22).

**8.** The monitoring tool as claimed in claim 8, **characterized in that** at least one of the additional information (A) is displayed as link (C) suitable to contact a responsible person by e-maif and/or to access the related performance details window (3).

**9.** The monitoring tool as claimed in claim 7 or 8, **characterized in that** the dashboard window (2) is adapted to display the performance items (21, 22) and the additional information (A) as a table with the performance items (21, 22) present in a first column and the additional information (A) in corresponding columns.

**10.** The monitoring tool as claimed in any of the preceding claims, **characterized in that** the dashboard window (2) is adapted to display a priority indicator (P) for each of the performance items (21, 22) indicating the sequence and/or importance of the performance items (21, 22) to be executed.

**11.** The monitoring tool as claimed in any of the preceding claims, **characterized in that** the dashboard window (2) comprises a progress window (23) indicating at least the number of executed performance items (21, 22) automatically received from status data from the data fields (321) of the performance details windows (3).

**12.** The monitoring tool as claimed in any of the preceding claims, **characterized in that** the performance details window (3) is accessible by clicking on a particular performance item (21, 22) within the dashboard window (2).

**13.** The monitoring tool as claimed in any of the preceding claims, **characterized in that** the performance items (21, 22) are related to different phases of the transfer process, where the different phases comprise one or more elements, preferably all elements, of the group of initializing phase, due diligence phase, knowledge acquisition phase, transfer phase, which might be passive and/or active, or calibration phase.

**14.** Method to operate the monitoring tool as claimed in claim 1 for monitoring and supporting a transfer process from a giving party involved in the transfer process to a receiving party involved in the transfer process having to at least one responsible person assigned to each party installed on a computer system with at least one computer screen providing multiple process related windows comprising the steps of
- accessing a tracking window (1) comprising at least a process window (11) to display project information, preferably comprising a contact window (12) displaying contact data, more preferably additionally comprising a statistic window (13) displaying statistic data related to the process,
- accessing a dashboard window (2), preferably via a tracking button (14), where the tracking window (1) is at least linked to;
- displaying at least multiple performance items (21, 22) to be executed within the transfer process on a the dashboard window (2),
- accessing a performance details window (3) individually linked to each of the performance items (21, 22), preferably by clicking on a particular performance item (21, 22) within the dashboard window (2);
- inserting and/or attaching process and/or performance data into the monitoring tool via editable data fields (321) in a data window (32) of the performance details window (3) further comprising an overview window (31) to display general performance data;
- creating a document file (D) automatically from the data inserted into the data window (32) by the monitoring tools also indicating the particular performance details window (3);
- uploading the document file (D) to a document share-point; and
- sending a process notification (N) automatically by e-mail comprising the document file (D) to at least one of the responsible persons by an information unit (4), wherein the automatic send-out of the notification is triggered by the uploading step, preferably sending the process e-mail (N) also to the responsible person of the subsequent performance items (21, 22) to be executed after filling the data window (32) of the performance details window (3) of the initial performance item (21, 22), which lead to the creation of the document file (D) sent by the process notification (N).

**15.** Method as claimed in claim 14, **characterized in that** the method further comprises the steps of displaying additional information (A) to each performance item (21, 22) in the dashboard window (2) in a table format comprising multiple columns also displaying a priority indicator (P) for each of the performance items (21, 22) indicating the sequence and/or importance of the performance items (21, 22) to be executed in the dashboard window (2), preferably indicating at least the number of executed performance items (21, 22) automatically received from status data from the data fields (321) of the performance details windows (3).
